# EUROPÄISCHE PATENTSCHRIFT

(11) **EP 4 584 052 B1**
(45) Veröffentlichungstag und Bekanntmachung des Hinweises auf die Patenterteilung: **28.10.2026**
(21) Anmeldenummer: 23757527.9
(22) Anmeldetag: 09.08.2023
(51) Int. Cl.: B25J 9/10, B25J 15/02, B25J 19/00, B25J 19/02, B25J 19/06

(54) **SPANN- ODER GREIFVORRICHTUNG MIT MULTIFUNKTIONSWELLE**
CLAMPING OR GRIPPING DEVICE WITH MULTIFUNCTIONAL SHAFT
DISPOSITIF DE SERRAGE OU DE PRÉHENSION À ARBRE MULTIFONCTIONNEL

(30) Priorität: 09.09.2022 DE 102022123042
(43) Veröffentlichungstag der Anmeldung: 16.07.2025
(73) Patentinhaber: SCHUNK SE & Co. KG Spanntechnik Greiftechnik Automatisierungstechnik, 74348 Lauffen am Neckar (DE)
(72) Erfinder: ALF, Jochen, 71642 Ludwigsburg (DE); SCHÄFFLER, Kevin, 74360 Ilsfeld (DE); HOLASCHKE, Philipp, 75031 Eppingen (DE); KIESOW, Daniel, 74211 Leingarten (DE)
(74) Vertreter: DREISS Patentanwälte PartG mbB
(86) Internationale Anmeldenummer: PCT/EP2023/071992
(87) Internationale Veröffentlichungsnummer: WO 2024/052034

(56) Entgegenhaltungen:
- EP-B1- 3 002 856
- DE-C2- 3 836 439
- US-A1- 2011 248 520

## Beschreibung

Die Erfindung betrifft eine Spann- oder Greifvorrichtung, insbesondere einen Parallelgreifer, zum Spannen oder Greifen von Werkstücken.

Aus der EP 1 905 549 A1 ist eine Greifvorrichtung mit einem Rotationsantrieb und zwei mittels eines Synchronzahnrads synchronisierten Schlitten offenbart, wobei an jedem Schlitten eine Verzahnung zum Eingriff mit dem Synchronzahnrad vorgesehen ist.

Aus der EP 3 002 856 B1 und der DE 38 36 439 C2 sind Greifvorrichtungen bekannt, wobei ein Getriebeabschnitt nicht zwischen einer Greifbacke und einem Elektronikabschnitt angeordnet ist. Aus der US 2011/248520 A1 ist ein elektrischer Greifer bekannt.

Die der Erfindung zugrundeliegende Aufgabe ist eine zuverlässige und einfach herzustellende Spann- oder Greifvorrichtung bereitzustellen.

Die Aufgabe wird gelöst durch einen Gegenstand mit den Merkmalen des Patentanspruchs 1. Die Spann- oder Greifvorrichtung weist ein Grundgehäuse, wenigstens eine in dem Grundgehäuse angeordnete und entlang einer Führungsachse erstreckende Backenführung auf. In der Backenführung ist wenigstens eine Greifbacke, insbesondere zwei, drei oder mehrere Greifbacken, angeordnet und verschieblich gelagert, wobei die Greifbacke entlang der Führungsachse zwischen einer Greifposition und einer Freigabeposition verlagerbar ist. Die Greifbacke kann auch als Spannelement ausgebildet sein. Die Spann- oder Greifvorrichtung weist ferner eine Antriebseinrichtung zum Verlagern der wenigstens eine Greifbacke auf, wobei die Antriebseinrichtung einen Rotationsantrieb und eine sich senkrecht zur Führungsachse und entlang einer Antriebsachse erstreckende, im Grundgehäuse drehbar gelagerte Antriebswelle zum Verbinden des Rotationsantriebs umfasst. Der Rotationantrieb kann als Elektromotor, insbesondere als Außenläufermotor, ausgebildet sein. Ferner weist die Antriebseinrichtung eine Getriebeeinrichtung und/oder eine Kupplungseinrichtung auf. Die Spann- oder Greifvorrichtung weist eine Positionsmesseinrichtung zum Erfassen des Drehwinkels der Antriebseinrichtung, insbesondere des Rotationsantriebs und/oder der Antriebswelle, und/oder zum Erfassen der Position der wenigstens einen Greifbacke auf, wobei die Position der Greifbacke unter anderem mittels des Winkels der Antriebswelle bestimmbar ist.

Das Grundgehäuse der Spann- oder Greifvorrichtung wird durch eine Zwischenwand in einen Getriebe- und/oder Kupplungsabschnitt und in einen Elektronikabschnitt unterteilt. Im Getriebe- und/oder Kupplungsabschnitt ist die Getriebeeinrichtung und/oder die Kupplungseinrichtung angeordnet und im Elektronikabschnitt ist der Rotationsantrieb und die Positionsmesseinrichtung angeordnet. Durch die räumliche Trennung von Getriebe- und/oder Kupplungsabschnitt und dem Elektronikabschnitt können die im Elektronikabschnitt angeordneten empfindlichen Bauteile, **z.B.** Elektromotor, Positionsmesseinrichtung oder Steuerung etc., von dem rauen Bedingungen im Bereich von Getriebe- und Kupplungseinrichtungen geschützt werden. Demnach wird verhindert, dass Verschmutzung, Abrieb, Flüssigkeiten und Fette vom Getriebe- und/oder Kupplungsabschnitt zum Elektronikabschnitt gelangen kann. Dies führt zu einem zuverlässigen und langlebigen Einsatz der Spann- oder Greifvorrichtung.

Das Grundgehäuse kann einteilig ausgebildet sein. Das Grundgehäuse kann ferner mindestens zwei Gehäuseteile mit wenigstens einem Außengehäuse und der Zwischenwand umfassen. Das wenigstens eine Außengehäuse und/oder die Zwischenwand können miteinander verschraubt sein. Ferner kann das Außengehäuse gegenüber der Umgebung und die Zwischenwand zum Abdichten bzw. Trennen des Getriebe- und/oder Kupplungsabschnitts und des Elektronikabschnitts Flachdichtungen aufweisen. Die Zwischenwand kann ferner derart ausgebildet sein, dass die Spann- oder Greifvorrichtung besonders stabil und steif ausgebildet ist. Die Zwischenwand kann ferner wenigstens eine Stufe aufweisen, wobei getriebe- und/oder kupplungsseitig im Bereich der Antriebseinrichtung ein größerer Bauraum für die Getriebe- und/oder die Kupplungseinrichtung vorgesehen ist und elektronikseitig im Bereich einer Regelungs- und/oder Steuerungseinrichtung ein größerer Bauraum, insbesondere ein Platinenraum für Leiterplatten etc., vorgesehen ist.

Ferner ist die Antriebswelle derart im Grundgehäuse vorgesehen, dass sich die Antriebswelle in den Elektronikabschnitt hinein erstreckt. Demnach können Informationen zu **z.B.** Position, Geschwindigkeit, Vibration, Temperatur etc. der Antriebseinrichtung, insbesondere der Antriebswelle oder der Greifbacke, unmittelbar im Elektronikbereich aufgenommen werden. Es ist nicht erforderlich, dass die Positionsmesseinrichtung oder ein Teil davon im Getriebe- und/oder Kupplungsabschnitt oder an der Greifbacke angeordnet ist. Dadurch kann eine besonders langlebige Positionsmesseinrichtung gewährleistet werden.

Ferner ist der Getriebe- und/oder Kupplungsabschnitt zwischen der wenigstens einen Greifbacke und dem Elektronikabschnitt angeordnet. Demnach wird eine besonders effiziente Antriebseinrichtung gebildet, wobei ein genügender Abstand zwischen den elektronischen Bauteilen und dem Verfahrbereich der Backen oder der Produktionsumgebung geschaffen wird.

Eine vorteilhafte Weiterbildung der Erfindung sieht vor, dass die Antriebswelle sich durch den Getriebe- und/oder Kupplungsabschnitt hindurch erstreckt. Damit ist möglich, dass die Antriebswelle multifunktional ausgebildet ist und eine Vielzahl von Funktionen erfüllt. Die Antriebswelle kann zum Übertragen der Bewegungsenergie auf die wenigstens eine Greifbacke, zum Lagern von Getriebe- und/oder Kopplungsabschnitten und zum Bereitstellen eines Anbindungspunkt für eine Positionsmesseinrichtung dienen.

Vorteilhafterweise ist die Antriebswelle in der Zwischenwand des Grundgehäuses drehbar gelagert. Dabei ist eine besonders sichere Lagerung der Antriebswelle gewährleistet.

Erfindungsgemäß weist die Antriebswelle ein erstes freies Ende auf, wobei das erste freie Ende der Antriebswelle im Elektronikabschnitt angeordnet ist. Demnach kann das Grundgehäuse, insbesondere das Außengehäuse, im Elektronikabschnitt geschlossen ausgebildet sein.

Eine vorteilhafte Weiterentwicklung sieht vor, dass die Positionsmesseinrichtung eine mit der Antriebswelle, insbesondere mit dem ersten freien Ende, zusammenwirkende Winkelmesseinrichtung und/oder einen Riemen aufweist. Die Winkelmesseinrichtung ist vorzugsweise drehfest und/oder starr mit der Antriebswelle verbunden. Anhand des Winkels der Antriebswelle kann einfach auf die Position der Greifbacke geschlossen werden. Die Winkelmesseinrichtung kann insbesondere als Absolutwertgeber ausgebildet sein.

Vorteilhafterweise ist die Winkelmesseinrichtung radial zur Antriebsachse versetzt angeordnet. Die Winkelmesseinrichtung kann vorteilhafterweise mittels eines Riemenelements, insbesondere eines Riemens, mit der Antriebswelle verbunden werden. Es ist ferner vorteilhaft, wenn der Riemen die Drehzahl der Antriebswelle hin zur Winkelmesseinrichtung untersetzt. So kann der gesamte Verfahrweg der Greifbacke mit einem einfachen und günstigen Single-Turn-Drehgeber erfasst werden. Es ist insbesondere vorteilhaft, wenn die Drehzahl der Antriebswelle derart untersetzt wird, dass der Hub der wenigstens einen Greifbacke einer vollständigen Drehung, also 360°, der Winkelmesseinrichtung entspricht. Zur Kopplung mit dem Riemen kann am ersten freien Ende eine Verzahnung vorgesehen sein. Die Verzahnung kann mittels eines hülsenförmigen oder zylindrischen Ritzels auf das erste freie Ende aufgeschoben oder aufgeschraubt werden oder kann integraler Bestandteil der Antriebswelle sein.

Es ist vorteilhaft, wenn der Rotationsantrieb eine Motorregelungseinrichtung, insbesondere einen Inkrementalgeber, zur Motorregelung und -kommutierung umfasst. Die Motorregelungseinrichtung umfasst vorzugsweise eine Taktscheibe und/oder eine Lichtschranke. Es ist vorteilhaft, dass die Taktscheibe starr mit dem Rotationsantrieb, insbesondere mit der Motorwelle, verbunden ist. Die Lichtschranke detektiert die Rotation der Taktscheibe und erfasst damit die Rotation des Rotationsantriebs.

Erfindungsgemäß weist die Antriebswelle ein dem ersten freien Ende gegenüberliegendes zweites freies Ende auf. Am zweiten freien Ende der Antriebswelle ist ein zur Getriebeeinrichtung und/oder zur Kupplungseinrichtung separat ausgebildetes Antriebsritzel angeordnet. An der wenigstens einen Greifbacke ist ein zur Getriebeeinrichtung und/oder zur Kupplungseinrichtung separat ausgebildetes und mit dem Antriebsritzel zusammenwirkendes Zahnstangenprofil vorgesehen. Im Betrieb kämmt das Antriebsritzel mit dem Zahnstangenprofil. Das Antriebsritzel kann hülsenförmig ausgebildet sein und auf das zweite freie Ende aufgeschoben werden oder integraler Bestandteil der Antriebswelle sein.

Eine vorteilhafte Weiterbildung sieht vor, dass die Kupplungseinrichtung als eine Klauenkupplung ausgebildet ist und ein erstes Kupplungselement, ein zweites

Kupplungselement und wenigstens ein in Umfangsrichtung zwischen dem ersten Kupplungselement und dem zweiten Kupplungselement angeordnetes Elastomerelement aufweist.

Eine derartige Kupplungseinrichtung stellt eine gute Leistungsübertragung sicher, wobei das Elastomerelement zur Greifkraftsicherung der wenigstens einen Greifbacke dient. Das erste Kupplungselement kann vorzugsweise wenigstens eine oder wenigstens zwei, insbesondere zwei oder vier, parallel zur Antriebsachse erstreckende Klauen aufweisen. Das zweite Kupplungselement weist eine Kupplungsaufnahme zur Aufnahme des ersten Kupplungselements und des Elastomerelements auf.

Es ist vorteilhaft, wenn das erste Kupplungselement dem Antriebsritzel zugewandt ist und mit der Antriebswelle drehfest verbunden ist, und wenn das zweite Kupplungselement dem Antriebsritzel abgewandt ist und drehbar auf der Antriebswelle gelagert ist. Demnach kann die Antriebswelle zur Lagerung des zweiten Kupplungselements Verwendung finden. Das erste Kupplungselement kann insbesondere auf die Antriebswelle aufgeschoben oder mit dieser einteilig ausgebildet sein.

Ferner ist vorteilhaft, wenn die Getriebeeinrichtung ein auf der Antriebswelle angeordnetes erstes Doppelritzel aufweist. Das erste Doppelritzel kann radial auf der Antriebswelle und axial an der Zwischenwand gelagert sein. Im Grundgehäuse, insbesondere im Getriebe- und/oder Kupplungsabschnitt, kann eine parallel und beabstandet zur Antriebswelle erstreckende Lagerwelle vorgesehen, wobei auf der Lagerwelle ein mit dem ersten Doppelritzel zusammenwirkendes zweites Doppelritzel zur Leistungsübertragung angeordnet ist.

Vorteilhafterweise weist das zweite Kupplungselement ein mit dem zweiten Doppelritzel zusammenwirkendes Kupplungsritzel auf. Das Kupplungsritzel ist radial außen an der Aufnahme des zweiten Kupplungselements angeordnet.

Eine vorteilhafte Weiterbildung der Erfindung sieht vor, dass der Rotationsantrieb als Außenläufermotor ausgebildet ist und/oder ein mit dem ersten Doppelritzel zusammenwirkendes Abtriebsritzel aufweist. So kann die Leistungsübertragung vom Rotationsantrieb auf die Antriebswelle erfolgen.

Es ist vorteilhaft, wenn eine Bremseinrichtung an der Antriebseinrichtung zur Greifkrafterhaltung vorgesehen ist, wobei die Bremseinrichtung als Magnetbremse mit einem mit dem ersten Doppelritzel zusammenwirkenden Bremsritzel ausgebildet sein kann. Die Bremseinrichtung, insbesondere die Magnetbremse, kann vorzugsweise im Elektronikabschnitt angeordnet sein. Das Bremsritzel kann vorzugsweise im Getriebe- und/oder Kupplungsabschnitt angeordnet sein. Sollte es zum Ausfall der Antriebseinrichtung, insbesondere des Rotationsantriebs kommen, bleibt die Greifkraft an der wenigstens einen Greifbacke durch die Bremseinrichtung erhalten.

Eine vorteilhafte Weiterentwicklung sieht vor, dass die Spann- oder Greifvorrichtung eine Steuerungs- und Regelungseinrichtung zur Steuerung und/oder Regelung der Antriebseinrichtung, der Bremseinrichtung, der Positionsmesseinrichtung und/oder der Motorregelungseinrichtung aufweist. Die Steuerungs- und Regelungseinrichtung weist vorzugsweise eine Hauptplatine und/oder eine Kommunikationsplatine auf. Die Kommunikationsplatine kann unter anderem IO-Link, Ethernet und/oder Modbus umfassen. Bei Verwendung von Ethernet weist die Steuerungs- und Regelungseinrichtung neben der Kommunikationsplatine eine Ethernet-Kommunikationsplatine auf.

Die Hauptplatine dient vorzugsweise zur Ansteuerung des Rotationsantriebs und/oder der Bremseinrichtung und/oder zur Auswertung der Positionsmesseinrichtung und/oder der Motorregelungseinrichtung. Ferner kann die Hauptplatine zur Datenverarbeitung und/oder Parametereinstellung der Spann- oder Greifvorrichtung Verwendung finden. Die Hauptplatine kann zudem die Kommunikation der genannten Kommunikationsarten der Kommunikationsplatinen verarbeiten. Zudem weist die Hauptplatine vorzugsweise eine galvanische Trennung zwischen der Logikverarbeitung und der Motoransteuerung.

Die Spann- oder Greifvorrichtung weist vorzugsweise einen Bremschopper auf, welcher insbesondere im Platinenraum angeordnet ist. Der Bremschopper dient zum Abbau der Rückspeisespannung des Rotationsantriebs, um so die verwendeten Netzteile zu schützen. Der Bremschopper misst vorzugsweise die Motorspannung und wird mittels der Steuerungs- und/oder Regelungseinrichtung, insbesondere mittels der Hauptplatine, angesteuert.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert wird.

Es zeigen:
- Figur 1: schematische Oberansicht einer erfindungsgemäßen Spann- oder Greifvorrichtung;
- Figur 2: schematische Schnittansicht entlang Schnitt A-A der Spann- oder Greifvorrichtung nach Fig. 1;
- Figur 2a: schematische Detailansicht des Details A der Fig. 2;
- Figur 3: schematische Schnittansicht entlang Schnitt D-D der Spann- oder Greifvorrichtung nach Fig. 1**;**
- Figur 3a: schematische Detailansicht des Details B der Fig. 3;
- Figur 4: schematische Schnittansicht entlang Schnitt E-E der Spann- oder Greifvorrichtung nach Fig. 1**;**
- Figur 5: schematische Schnittansicht entlang Schnitt F-F der Spann- oder Greifvorrichtung nach Fig. 1**;**
- Figur 6: schematische Unteransicht in Grundgehäuse der Spann- oder Greifvorrichtung nach Fig. 1**;**
- Figur 6a: schematische Schnittansicht entlang Schnitt A-A des Grundgehäuses nach Fig. 6**;**
- Figur 7a: schematische Seitenansicht einer erfindungsgemäßen Antriebswelle;
- Figur 7b: schematische Seitenansicht der Antriebswelle nach Fig. 7a mit einem ersten Kupplungselement;
- Figur 7c: schematische Seitenansicht der Antriebswelle nach Fig. 7a mit einer Kupplungseinrichtung;
- Figur 7d: schematische Schnittansicht der Antriebswelle nach Fig. 7c;
- Figur 8a: schematische Unteransicht der Antriebswelle nach Fig. 7a mit Positionsmesseinrichtung;
- Figur 8b: schematische Seitenansicht der Antriebswelle nach Fig. 8a;
- Figur 8c: schematische Oberansicht der Antriebswelle nach Fig. 8a;
- Figur 9a: schematische Seitenansicht der erfindungsgemäßen Getriebeeinrichtung in einem ersten Montageschritt;
- Figur 9b: schematische Seitenansicht der Getriebeeinrichtung nach Fig. 9a in einem zweiten Montageschritt;
- Figur 9c: schematische Seitenansicht der Getriebeeinrichtung nach Fig. 9a in einem dritten Montageschritt;
- Figur 9d: schematische Seitenansicht der Getriebeeinrichtung nach Fig. 9a in einem vierten Montageschritt;
- Figur 10a: perspektivische Oberansicht einer erfindungsgemäßen Greifbacke;
- Figur 10b: perspektive Unteransicht der Greifbacke gemäß Fig. 10a;
- Figur 10c: schematische Oberansicht der Greifbacke gemäß Fig. 10a;
- Figur 10d: schematische Unteransicht der Greifbacke gemäß Fig. 10a;
- Figur 11a: schematische Oberansicht einer erfindungsgemäßen Steuerungs- und Regelungseinrichtung mit Ethernet;
- Figur 11b: schematische Unteransicht der Steuerungs- und Regelungseinrichtung gemäß Fig. 11a;
- Figur 11c: schematische Seitenansicht der Steuerungs- und Regelungseinrichtung gemäß Fig. 11a;
- Figur 11d: schematische Schnittansicht einer erfindungsgemäßen Spann- oder Greifvorrichtung mit einer Steuerungs- und Regelungseinrichtung nach Fig. 11a;
- Figur 12a: schematische Oberansicht einer erfindungsgemäßen Steuerungs- und Regelungseinrichtung mit IO-Link;
- Figur 12b: schematische Unteransicht der Steuerungs- und Regelungseinrichtung gemäß Fig. 12a;
- Figur 12c: schematische Seitenansicht der Steuerungs- und Regelungseinrichtung gemäß Fig. 12a;
- Figur 12d: schematische Schnittansicht einer erfindungsgemäßen Spann- oder Greifvorrichtung mit einer Steuerungs- und Regelungseinrichtung nach Fig. 12a;
- Figur 13a: schematische Oberansicht einer erfindungsgemäßen Steuerungs- und Regelungseinrichtung mit Modbus;
- Figur 13b: schematische Unteransicht der Steuerungs- und Regelungseinrichtung gemäß Fig. 13a;
- Figur 13c: schematische Seitenansicht der Steuerungs- und Regelungseinrichtung gemäß Fig. 13a; und
- Figur 13d: schematische Schnittansicht einer erfindungsgemäßen Spann- oder Greifvorrichtung mit einer Steuerungs- und Regelungseinrichtung nach Fig. 13a.

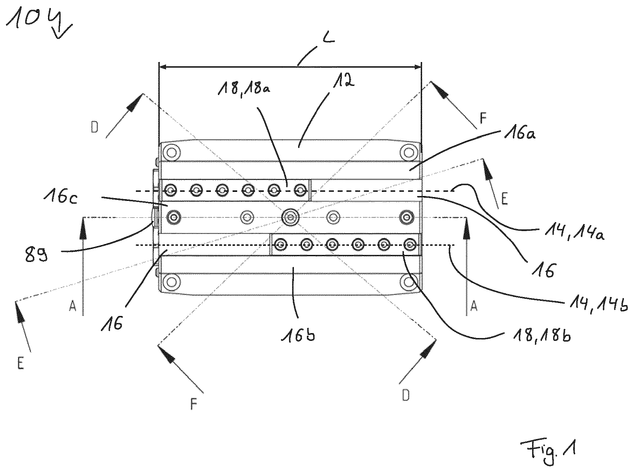

Die Fig. 1 bis 5 zeigen eine elektrisch betätigbare Spann- oder Greifvorrichtung 10, welche als Parallelgreifer ausgebildet ist, zum Spannen oder Greifen von nicht gezeigten Werkstücken mit einem Grundgehäuse 12 und mit einer im Grundgehäuse 12 angeordneten, parallel zu einer Führungsachse 14 erstreckenden Backenführung 16. Gemäß Fig. 1 umfasst die Backenführung 16 ein erstes Backenführungselement 16a, ein zweites Backenführungselement 16b und ein zwischen dem ersten Backenführungselement 16a und dem zweiten Backenführungselement 16b angeordnetes drittes Backenführungselement 16c. In der Backenführung 16 sind zwei parallel zur Führungsachse 14 zwischen einer Greifposition und einer Freigabeposition verlagerbare Greifbacken 18 vorgesehen. Die erste Greifbacke 18a kann zwischen dem ersten Backenführungselement 16a und dem dritten Backenführungselement 16c angeordnet sein und entlang einer ersten Führungsachse 14a verlagerbar sein. Die zweite Greifbacke 18b kann zwischen dem zweiten Backenführungselement 16b und dem dritten Backenführungselement 16c angeordnet sein und entlang einer zweiten Führungsachse 14b verlagerbar sein. Die Führungsachsen 14a und 14b verlaufen parallel und/oder beabstandet zueinander. Die Greifbacken 18 können insbesondere einen Hub aufweisen. Die Backenführung 16 weist eine parallel zur Führungsachse 14 verlaufende Länge L auf. Beim Innengreifen oder -spannen kann die Freigabeposition so vorgesehen sein, dass beide Greifbacken 18 axial den größten Abstand zueinander aufweisen und die Greifposition kann so vorgesehen sein, dass beide Greifbacken 18 axial den geringsten Abstand zueinander aufweisen. Eine umgekehrte Ausrichtung ist beim Außengreifen oder -spannen ebenfalls denkbar.

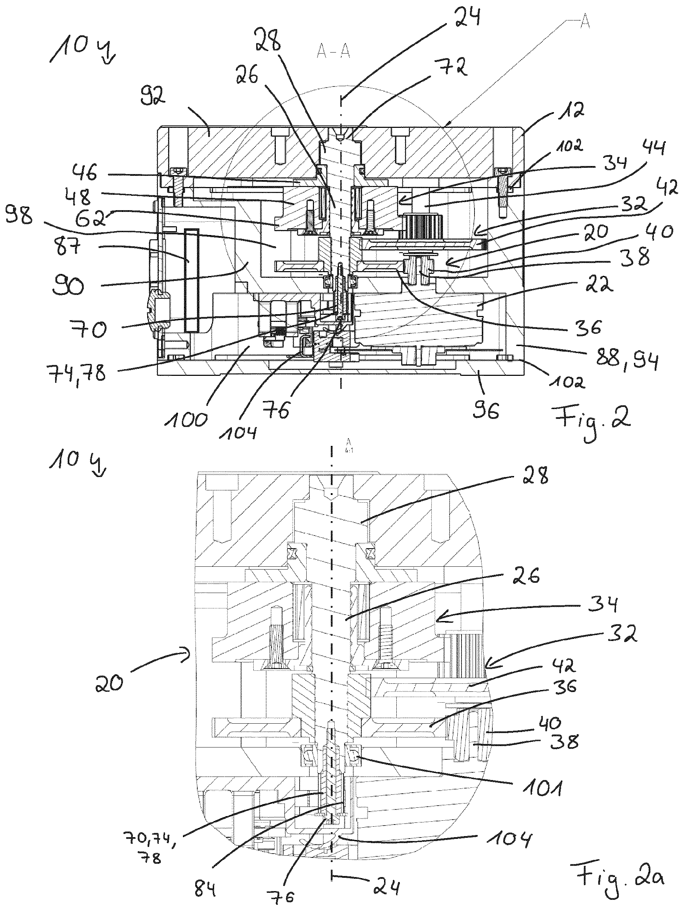

Gemäß Fig. 2 bis 5 sind die Greifbacken 18 mittels einer im Grundgehäuse 12 angeordneten Antriebseinrichtung 20 parallel zur Führungsachse 14 antreibbar. Die Antriebseinrichtung 20 weist einen Rotationsantrieb 22, eine mit dem Rotationsantrieb 22 zusammenwirkende, entlang einer Antriebsachse 24 erstreckende Antriebswelle 26 und ein auf der Antriebswelle 26 drehfest angeordnetes Antriebsritzel 28 auf. Die Antriebsachse 24 verläuft senkrecht zur Führungsachse 14. Die Antriebswelle 26 ist drehbar im Grundgehäuse 12 gelagert. Der Rotationsantrieb 22 ist als elektrischer Außenläufermotor ausgebildet. Die Antriebsleistung des Rotationsantriebs 22 wird mittels der Antriebswelle 26 auf das Antriebsritzel 28 übertragen. Das Antriebsritzel 28 synchronisiert die Verlagerung beider Greifbacken 18.

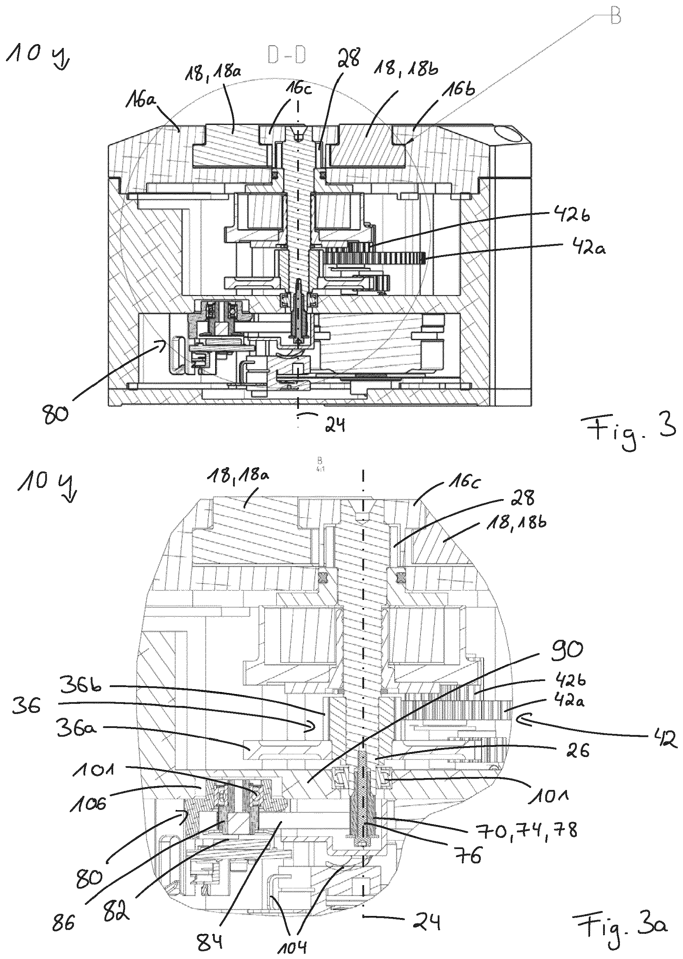

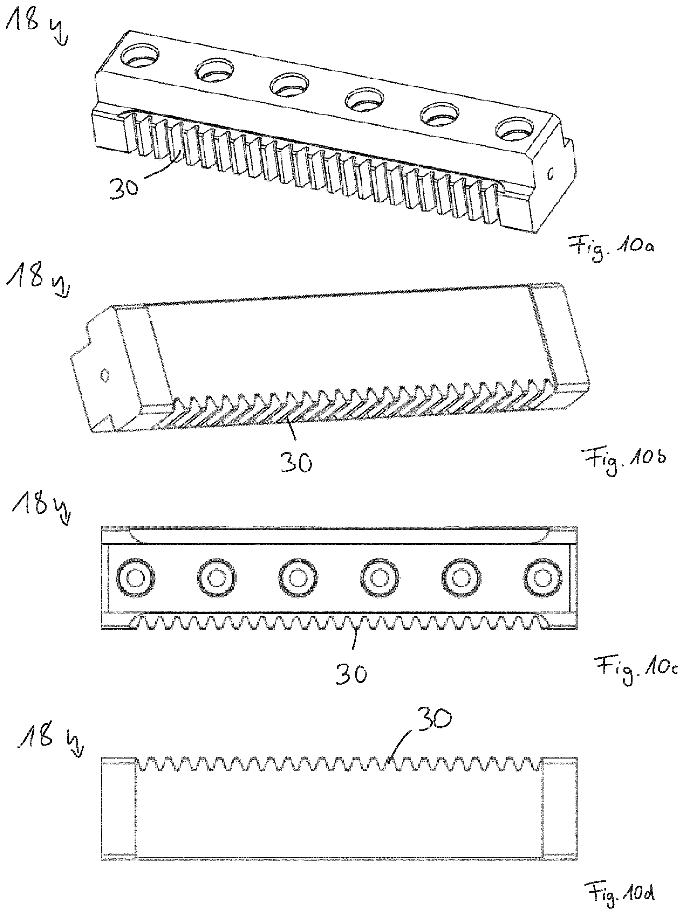

Nach Fig. 10a bis 10d ist an den Greifbacken 18 ein dem dritten Backenführungselement 16c zugewandtes Zahnstangenprofil 30 mit einer Verzahnung vorgesehen, wobei das Antriebsritzel 28 eine zum Zahnstangenprofil 30 korrespondiere Verzahnung aufweist. Das Antriebsritzel 28 ist im dritten Backenführungselement 16c angeordnet und insbesondere senkrecht zur Führungsachse 14 zwischen den beiden Greifbacken 18 angeordnet. Im Betrieb kämmt die Verzahnung des Antriebsritzels 28 mit der Verzahnung der Greifbacke 18, insbesondere des Zahnstangenprofils 30. Nach Fig. 3 ist vorzugsweise die Backenführung 16 als T-Nut und/oder die Greifbacke 18 als T-Profil ausgebildet.

Die Antriebseinrichtung 20 gemäß Fig. 2 bis 5 und Fig. 7a bis 9d umfasst ferner eine Getriebeeinrichtung 32 und eine Kupplungseinrichtung 34. Die Getriebeeinrichtung 32 weist ein erstes Doppelritzel 36 mit einem ersten Ritzel 36a und einem gegenüber dem ersten Ritzel 36a mit einem kleineren Durchmesser ausgebildeten zweiten Ritzel 36b auf. Das erste Ritzel 36a und das zweite Ritzel 36b sind drehfest zueinander, und insbesondere einstückig oder miteinander verpresst, ausgebildet. Das erste Doppelritzel 36 wird durch ein auf der Motorwelle 38 angeordnetes Abtriebsritzel 40 angetrieben, wobei das Abtriebsritzel 40 im Betrieb mit dem ersten Ritzel 36a des ersten Doppelritzels 36 kämmt. Die Übersetzung zwischen dem Abtriebsritzel 40 und dem ersten Ritzel 36a des ersten Doppelritzels 36 liegt in einem Bereich zwischen 2 und 10, insbesondere in einem Bereich zwischen 2 und 6, und bevorzugt in einem Bereich zwischen 2,9 und 5. Das erste Doppelritzel 36 ist auf der Antriebswelle 26 drehbar gelagert. Demnach kann das erste Doppelritzel 36 eine von der Antriebswelle 26 unterschiedliche Drehzahl aufweisen.

Die Getriebeeinrichtung 32 weist gemäß Fig. 2 bis 5 und Fig. 7a bis 9d zudem ein zu dem ersten Doppelritzel 36 identisches zweites Doppelritzel 42 auf. Das zweite Doppelritzel 42 umfasst ebenfalls ein erstes Ritzel 42a und ein gegenüber dem ersten Ritzel 42a mit einem kleineren Durchmesser ausgebildetes zweites Ritzel 42b. Das erste Ritzel 42a und das zweite Ritzel 42b sind drehfest zueinander, und insbesondere einstückig oder miteinander verpresst, ausgebildet. Das zweite Doppelritzel 42 ist auf einer nicht drehbar, insbesondere fest, am Grundgehäuse 12 angeordneten Lagerwelle 44 angeordnet. Die Lagerwelle 44 erstreckt sich vorzugsweise parallel zur Antriebsachse 24 und ist beabstandet zur Antriebswelle 26 und/oder zur Motorwelle 38 angeordnet. Im Betrieb kämmt das erste Ritzel 42a des zweiten Doppelritzels 42 mit dem zweiten Ritzel 36b des ersten Doppelritzels 36. Die Übersetzung zwischen dem zweiten Ritzel 36b des ersten Doppelritzels 36 und dem ersten Ritzel 42a des zweiten Doppelritzels 42 liegt in einem Bereich zwischen 2 und 10, insbesondere in einem Bereich zwischen 2 und 6, und bevorzugt in einem Bereich zwischen 2,9 und 4,4.

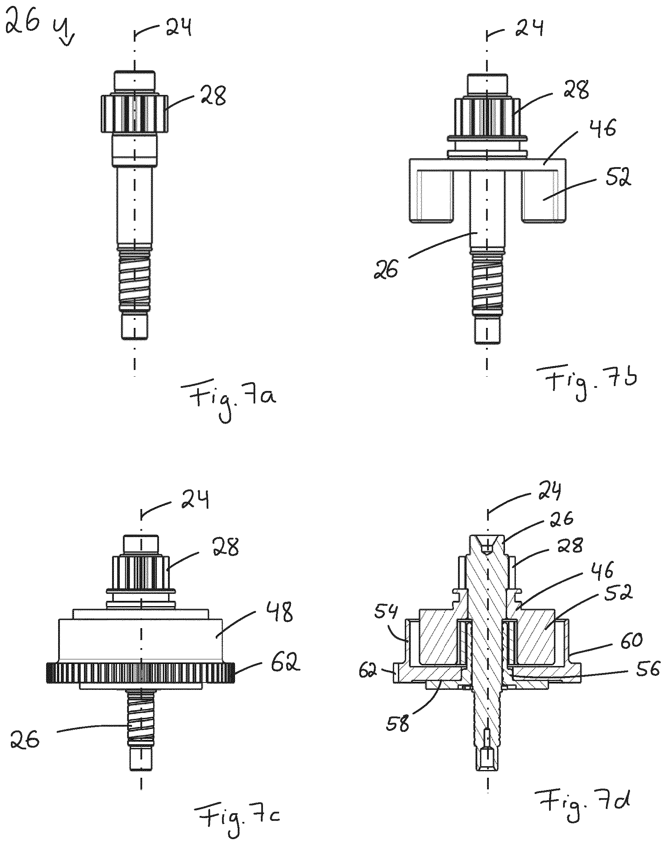

Die Kupplungseinrichtung 34 gemäß Fig. 7b bis 8b ist als eine Klauenkupplung ausgebildet und weist ein erstes Kupplungselement 46, ein zweites Kupplungselement 48 und wenigstens ein in Umfangsrichtung zwischen dem ersten Kupplungselement 46 und dem zweiten Kupplungselement 48 angeordnetes Elastomerelement 50 auf. Das erste Kupplungselement 46 ist drehfest mit der Antriebswelle 26 verbunden weist zwei parallel zur Antriebsachse 24 verlaufende Klauen 52 auf. Das zweite Kupplungselement 48 ist drehbar auf der Antriebswelle 26 gelagert und weist eine Kupplungsaufnahme 54 zur Aufnahme des ersten Kupplungselements 46, insbesondere der Klauen 52, und zur Aufnahme des Elastomerelements 50 auf. Das erste Kupplungselement 46 ist entlang der Antriebsachse backenseitig, insbesondere dem Antriebsritzel 28 zugewandt, und das zweite Kupplungselement 48 motorseitig, insbesondere dem Rotationsantrieb 22 zugewandt, angeordnet.

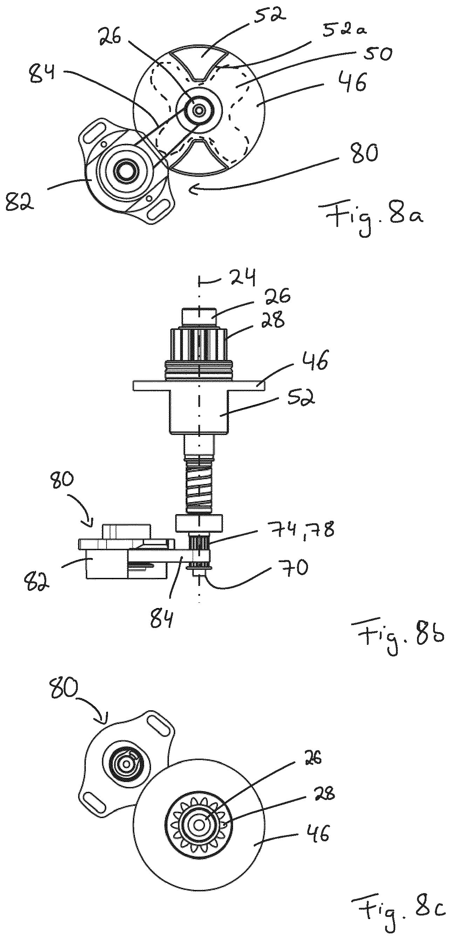

Das zweite Kupplungselement 48 ist nach Fig. 7d zweiteilig ausgebildet und weist neben der Kupplungsaufnahme 54 eine auf der Antriebswelle 26 aufgeschobene Kupplungshülse 56 mit einem Kupplungsanschlag 58 auf, wobei die Kupplungsaufnahme 54 auf die Kupplungshülse 56 aufgeschoben wird. In Fig. 8a ist die Ausgestaltung der Klauen 52 ersichtlich, wobei die Klauen 52 trapezförmig ausgebildet sind und verrundete Klauenanschlagsflächen 52a zum Zusammenwirken mit dem Elastomerelement 50 aufweisen. Die Kupplungsaufnahme 54 ist korrespondierend zu den Klauen 52 ausgebildet, wobei ein Zwischenraum für das Elastomerelement 50 vorgesehen ist. Das Elastomerelement 50 ist insbesondere zur Greifkraftsicherung vorgesehen.

Die Kupplungsaufnahme 54 weist gemäß Fig. 7c an seiner radial äußeren Umfangsfläche 60 ein Kupplungsritzel 62 auf, wobei das Kupplungsritzel 62 im Betrieb mit dem zweiten Ritzel 42b des zweiten Doppelritzels 42 kämmt. Die Übersetzung zwischen dem zweiten Ritzel 42b des zweiten Doppelritzels 42 und dem Kupplungsritzel 62 liegt in einem Bereich zwischen 2 und 10, insbesondere in einem Bereich zwischen 2 und **6,** und bevorzugt in einem Bereich zwischen 2,9 und **3,8.** Folglich wird die Leistung des Rotationsantriebs 22 mittels des Abtriebsritzels 40, des ersten Doppelritzels 36, des zweiten Doppelritzels 42, der Kupplungseinrichtung 34, des Antriebsritzels 28 auf die Greifbacken 18 übertragen. Dabei sind insbesondere das erste Doppelritzel 36, die Kupplungseinrichtung 34 und das Antriebsritzel 28 auf der Antriebswelle 26 angeordnet.

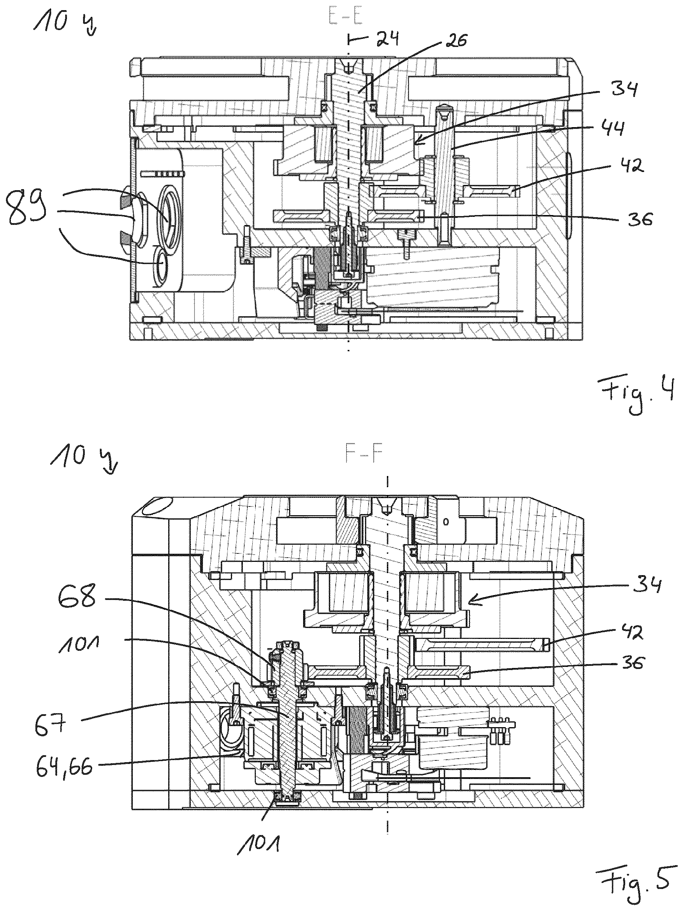

An dem ersten Doppelritzel 36, insbesondere am ersten Ritzel 36a des Doppelritzels 36, greift gemäß Fig. 5 eine Bremseinrichtung 64 an, welche eine Magnetbremse 66 mit einem auf einer Bremswelle 67 angeordneten Bremsritzel 68 aufweist. Für den Fall des Energieverlusts der Antriebseinrichtung 20 kann mittels der Bremseinrichtung 64 eine Greifkrafterhaltung der Greifbacken 18 erreicht werden.

Ferner weist die Antriebswelle 26 ein dem Rotationsantrieb 22 zugewandtes erstes freies Ende 70 und ein den Greifbacken 18 zugewandtes, dem ersten freien Ende 70 entlang der Antriebsachse 24 gegenüberliegendes zweites freies Ende 72 auf. An dem zweites freien Ende 72 der Antriebswelle 28 ist das Antriebsritzel 28 angeordnet. An dem ersten freien Ende 70 der Antriebswelle 26 ist gemäß Fig. 8a bis 8c ein Messabschnitt 74 vorgesehen, wobei der Messabschnitt 74 mit der Antriebswelle 26 einstückig ausgebildet sein kann oder an die Antriebswelle 26 mittels einem entlang der Antriebsachse 24 erstreckenden Befestigungsmittel 76, insbesondere einer Schraube, befestigbar ist. Der Messabschnitt 74 ist insbesondere als Messritzel 78 drehfest zur Antriebswelle 26 ausgebildet.

Der Messabschnitt 74 dient zur Anbindung an eine Positionsmesseinrichtung 80. Die Positionsmesseinrichtung 80 ist dazu ausgebildet und/oder eingerichtet, den Drehwinkel der Antriebseinrichtung 20, insbesondere des Rotationsantriebs 22 und/oder der Antriebswelle 26, und/oder die Position wenigstens einer Greifbacke 18 zu erfassen. Dazu ist gemäß Fig. 8a und 8b eine Winkelmesseinrichtung 78 vorgesehen, welche mittels eines Riemens 84 mit der Antriebswelle 26 verbunden ist. Der Riemen 84 überträgt die Rotation von der Antriebswelle 26 auf die Winkelmesseinrichtung 82, insbesondere auf ein an der Winkelmesseinrichtung 82 angeordnetes Sensorritzel 86. Der Riemen 84 und/oder das Messritzel 78 und/oder das Sensorritzel 86 sind derart ausgelegt, dass die Drehzahl der Antriebswelle 26 zur Winkelmesseinrichtung 82 hin untersetzt wird. Die Untersetzung ist derart ausgelegt, dass der gesamte Hub der Greifbacke 18 maximal oder genau einer Drehung der Winkelmesseinrichtung 82, insbesondere des Sensorritzels 86, entspricht. So kann ein einfacher und günstiger Single-Turn-Drehgeber als Winkelmesseinrichtung 82 zum Einsatz kommen.

Die Spann- oder Greifvorrichtung 10 weist ferner gemäß Fig. 2 im Grundgehäuse 12 eine Steuerungs- und Regelungseinrichtung 87 auf, wobei diese zur Steuerung und/oder Regelung des Antriebseinrichtung 20, der Bremseinrichtung 64, der Positionsmesseinrichtung 80 ausgebildet und/oder eingerichtet ist. Die Spann- oder Greifvorrichtung 10 kann mittels Schnittstellen 89 mit elektrischer Energie versorgt werden. Ferner kann über die Schnittstellen 89 weitere Medien und/oder Informationen übertragen werden.

Das Grundgehäuse 12 weist gemäß Fig. 2 bis Fig. 6a ein Außengehäuse 88 und eine Zwischenwand 90 auf. Das Außengehäuse 88 umfasst einen parallel zur Führungsachse 24 erstreckenden Gehäusedeckel 92, einen parallel zur Antriebsachse erstreckenden Gehäusemantel 94 und einen parallel zur Führungsachse 24 erstreckenden Gehäuseboden 96. Die Zwischenwand 90 ist im Grundgehäuse 12 angeordnet und erstreckt sich zwischen den Innenseiten des Gehäusemantels 94. Die Zwischenwand 90 unterteilt das Innere des Grundgehäuses 12 in einen Getriebe- und/oder Kupplungsabschnitt 98 und einen Elektronikabschnitt 100.

Im Getriebe- und/oder Kupplungsabschnitt 98 ist wenigstens eines oder mehrere der folgenden Bauteile, vorzugsweise alle, angeordnet: Kupplungseinrichtung 34, insbesondere erstes Kupplungselement 46, zweites Kupplungselement 48, Elastomerelement 50; Getriebeeinrichtung 32, insbesondere erstes Doppelritzel 36, zweites Doppelritzel 42; Lagerwelle 44; Antriebswelle 26; Antriebsritzel 40; Bremsritzel 68.

Im Elektronikabschnitt 100 ist wenigstens eines oder mehrere der folgenden Bauteile, vorzugsweise alle, angeordnet: Rotationsantrieb 22; Antriebswelle 26, insbesondere erstes freie Ende der Antriebswelle 70, Messabschnitt 74, Messritzel 78; Positionsmesseinrichtung 80, insbesondere Winkelmesseinrichtung 82, Riemen 80; Magnetbremse 66; Steuerungs- und Regelungseinrichtung 87.

Durch die Trennung des Grundgehäuses 12 mittels der Zwischenwand 90 sind die sensiblen elektrischen Bauteile vor der groben Umgebung für die Getriebe- und/oder Kupplungseinrichtung geschützt.

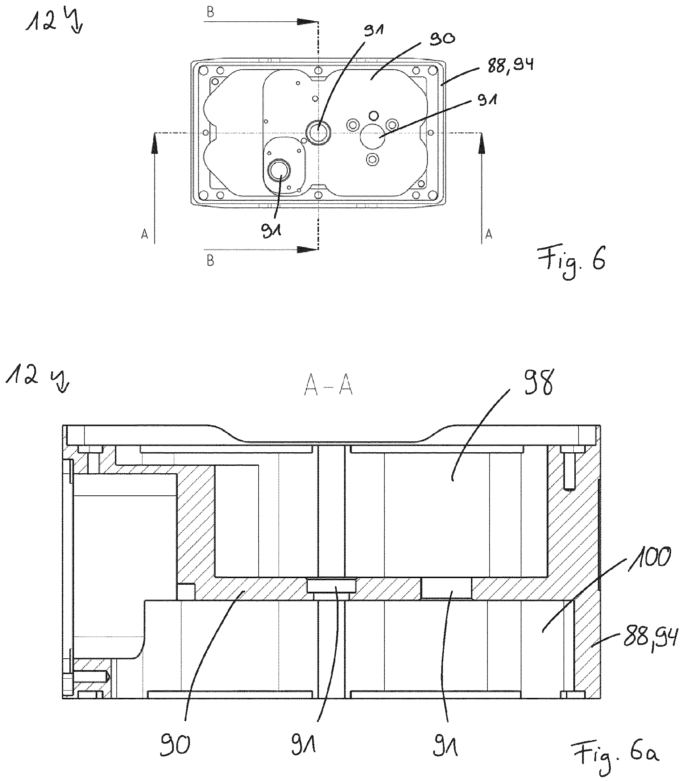

Ferner ist gemäß Fig. 3, 6 und 6a die Zwischenwand 90 stufenartig ausgebildet, wobei insbesondere im Bereich der Antriebsachse 24 die Zwischenwand 90 hin zum Elektronikabschnitt 100 zurückversetzt ist und im Bereich der Steuerungs- und Regelungseinrichtung 87 die Zwischenwand 90 hin zum Getriebe- und/oder Kupplungsabschnitt 98 zurückversetzt ist. Demnach bietet sich trotz Trennung ausreichend Bauraum zum Anordnen der Getriebeeinrichtung 32 und der Kupplungseinrichtung 34 im Getriebe- und/oder Kupplungsabschnitt 98 und der Steuerungs- und Regelungseinrichtung 87 im Elektronikabschnitt 100.

Das Grundgehäuse 12, insbesondere die Zwischenwand 90 und das Außengehäuse 88, ist mit Dichtungen 102, insbesondere Flachdichtungen, vor der äußeren Umgebung geschützt. Ferner ist vorteilhaft, dass auch im Inneren des Grundgehäuses 12, also zwischen dem Getriebe- und/oder Kupplungsabschnitt 98 und dem Elektronikabschnitt 100 Dichtungen 102, insbesondere Flachdichtungen, vorgesehen sind.

Es stellt sich als besonders vorteilhaft heraus, dass sich die Antriebswelle 26 von den Greifbacken 18 durch den Getriebe- und/oder Kupplungsabschnitt 98 in den Elektronikabschnitt 100 erstreckt. Die Antriebswelle 26 ist durch die Zwischenwand 90 hindurchgeführt. Die Antriebswelle 26 ist mittels eines Lagerelements 101 drehbar in der Zwischenwand 90 gelagert. Dabei ragt insbesondere das erste freie Ende 70 bzw. der Messabschnitt 74 der Antriebswelle 26 in den Elektronikabschnitt 100 hinein. Demnach kann besonders einfach die Drehzahl der Antriebswelle 26, insbesondere des Antriebsritzel 28, und/oder die Position der Greifbacke 18 erfasst werden. Jedoch ist es dafür nicht erforderlich, dass die Positionsmesseinrichtung 80 an der Greifbacke 18 oder im Getriebe- und/oder Kupplungsabschnitt 98 angeordnet ist. Somit kann eine hochgenaue und langlebige Messung erfolgen. Ferner weist die Zwischenwand 90 Durchbrüche 91 für die Antriebswelle 26, die Motorwelle 38, die Lagerwelle 44 und/oder die Welle der Bremseinrichtung 64 auf.

Die Zwischenwand weist gemäß Fig. 3 und 3a eine Aufnahme 106 zur Aufnahme der Positionsmesseinrichtung 80 auf, wobei die das Sensorritzel 86 in der Zwischenwand 90 mittels eines Lagerelements 101 drehbar gelagert ist. Die Bremswelle 67 ist mittels zweier Lagerelemente 101 im Gehäuseboden 96 und in der Zwischenwand 90 drehbar gelagert.

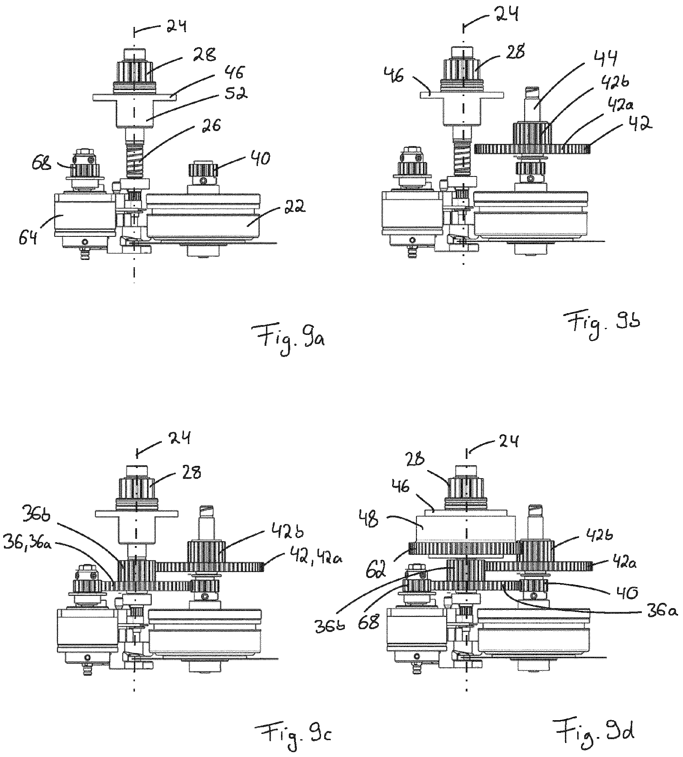

In den Fig. 9a bis 9d ist dargestellt, wie die Antriebseinrichtung 20 im Grundgehäuse 12 montierbar ist, wobei der Übersichtlichkeit halber nur die Antriebseinrichtung 20 in verschiedenen Montagestufen gezeigt ist. Zunächst wird der Gehäusemantel 94 mit der Zwischenwand 90 zusammengeschraubt. Im Anschluss kann bodenseitig der Rotationsantrieb 22, die Bremseinrichtung 64 und die Positionsmesseinrichtung eingebracht werden. Dann kann der Gehäuseboden am Gehäusemantel 94 angeschraubt werden. Ferner kann deckelseitig die Antriebswelle 26 und die Lagerwelle 44 eingebracht werden. Anschließend wird deckelseitig auf die Motorwelle 38 das Abtriebsritzel, auf die Antriebswelle 26 das erste Doppelritzel 36 und dann auf die Lagerwelle 44 das zweite Doppelritzel 42 aufgeschoben. Ferner wird das Bremsritzel 68 auf einer Welle der Bremseinrichtung 64 montiert. Im Anschluss erfolgt die Montage der Kupplungseinrichtung 34, indem zunächst das zweite Kupplungselement 48 mit dem Elastomerelement 50 auf die Antriebswelle 26 aufgeschoben wird. Anschließend wird das erste Kupplungselement 46 und das Antriebsritzel 28 auf der Antriebswelle 26 aufgebracht. Zum Abschluss kann der Gehäusedeckel 92 auf das Außengehäuse 88 geschraubt werden. Die Multifunktionalität der Antriebswelle 26 zeigt, dass die Spann- oder Greifvorrichtung 10 besonders einfach zu montieren ist.

Ferner sind gemäß Fig. 2 bis 4 im Elektronikabschnitt 100, insbesondere an der Positionsmesseinrichtung 80, der Bremseinrichtung 64 und/oder der Steuerungs- und Regelungseinrichtung 87 Kabelhalterungen 104 zum Halten und Führen der nicht dargestellten die Bauteile verbindenden Kabel vorgesehen.

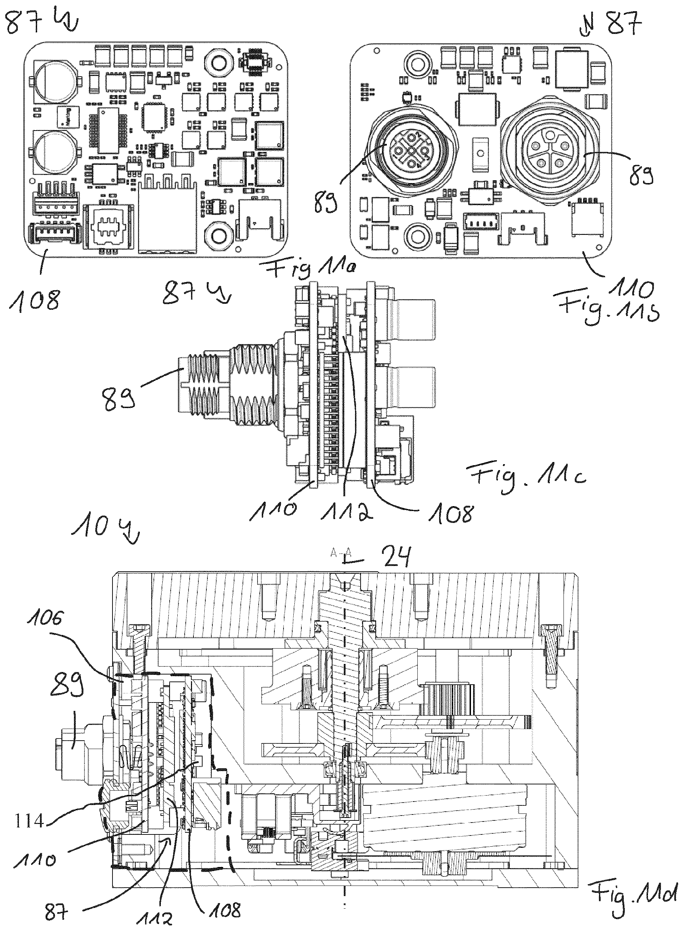

In den Fig. 11a bis 11d ist eine Steuerungs- und Regelungseinrichtung 87 mit einer Ethernet-Kommunikation gezeigt. Die Steuerungs- und Regelungseinrichtung 87 ist gemäß Fig. 11d in einem durch die Zwischenwand 90, insbesondere der Stufe der Zwischenwand 90, dem Gehäusemantel 94 und dem Gehäuseboden 96 begrenzten Platinenraum 106, der durch die gestrichelte Linie dargestellt ist, angeordnet. Die Steuerungs- und Regelungseinrichtung 87 weist eine Hauptplatine 108, eine Kommunikationsplatine 110 und eine Ethernet-Kommunikationsplatine 112 auf. Die Platinen 108, 110, 112 sind parallel zur Antriebsachse 24 angeordnet.

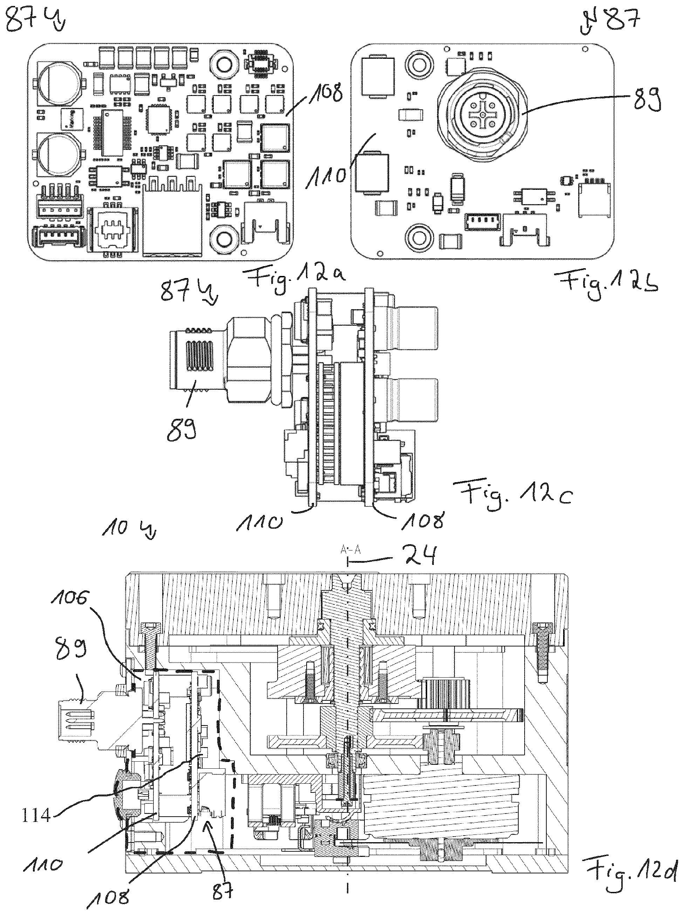

In den Fig. 12a bis 12d ist eine Steuerungs- und Regelungseinrichtung 87 mit einer IO-Link-Kommunikation gezeigt. Die Steuerungs- und Regelungseinrichtung 87 ist gemäß Fig. 12d im Platinenraum 106 angeordnet. Die Steuerungs- und Regelungseinrichtung 87 weist eine Hauptplatine 108 und eine Kommunikationsplatine 110 auf. Die Platinen 108, 110 sind parallel zur Antriebsachse 24 angeordnet.

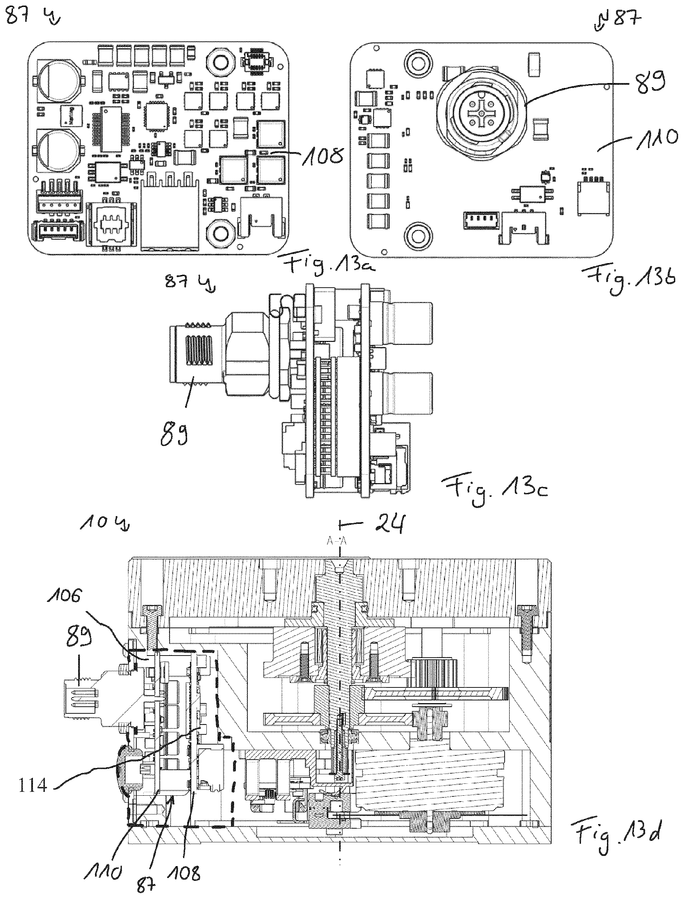

In den Fig. 13a bis 13d ist eine Steuerungs- und Regelungseinrichtung 87 mit einer Modbus-Kommunikation gezeigt. Die Steuerungs- und Regelungseinrichtung 87 ist gemäß Fig. 13d im Platinenraum 106 angeordnet. Die Steuerungs- und Regelungseinrichtung 87 weist eine Hauptplatine 108 und eine Kommunikationsplatine 110 auf. Die Platinen 108, 110 sind parallel zur Antriebsachse 24 angeordnet.

Die Hauptplatine 108 ist unabhängig von der wechselnden Kommunikationsplatine 110 gleich ausgebildet und erkennt automatisch, welche der Kommunikationsplatinen 110 Verwendung findet. Auf der Hauptplatine 108 ist ein Bremschopper 114 zum Abbau der Rückspeisespannung des Rotationsantriebs 22 angeordnet, um ein an der Spann- oder Greifvorrichtung 10 verbundenes Netzteil zu schützen.

Es ist besonders vorteilhaft, dass eine Spann- oder Greifvorrichtung 10 mit einem im Grundgehäuse 12 angeordneten Bremschopper 114 ausgebildet ist. Der in der Spann- oder Greifvorrichtung 10 integrierte Bremschopper 114 ermöglicht eine bremsnahe Messung der Rückspeisespannung in der Bremseinrichtung 64 und demnach einen gezielten Abbau der Rückspeisespannung bei einem Bremsvorgang der Bremseinrichtung 64.

### Bezugszeichenliste

- L: Länge der Backenführung
- 10: Spann- oder Greifvorrichtung
- 12: Grundgehäuse
- 14, 14a, 14b: Führungsachse
- 16: Backenführung
- 16a, 16b, 16c: Backenführungselement
- 18, 18a, 18b: Greifbacke
- 20: Antriebseinrichtung
- 22: Rotationsantrieb
- 24: Antriebsachse
- 26: Antriebswelle
- 28: Antriebsritzel
- 30: Zahnstangenprofil
- 32: Getriebeeinrichtung
- 34: Kupplungseinrichtung
- 36: erstes Doppelritzel
- 36a, 36b: Ritzel des ersten Doppelritzels
- 38: Motorwelle
- 40: Abtriebsritzel
- 42: zweites Doppelritzel
- 42a, 42b: Ritzel des zweiten Doppelritzels
- 44: Lagerwelle
- 46: erstes Kupplungselement
- 48: zweites Kupplungselement
- 50: Elastomerelement
- 52: Klauen
- 52a: Klauenanschlagsfläche
- 54: Kupplungsaufnahme
- 56: Kupplungshülse
- 58: Kupplungsanschlag
- 60: Umfangsfläche der Kupplungsaufnahme
- 62: Kupplungsritzel
- 64: Bremseinrichtung
- 66: Magnetbremse
- 67: Bremswelle
- 68: Bremsritzel
- 70: erstes freies Ende der Antriebswelle
- 72: zweites freies Ende der Antriebswelle
- 74: Messabschnitt
- 76: Befestigungsmittel für Messabschnitt
- 78: Messritzel
- 80: Positionsmesseinrichtung
- 82: Winkelmesseinrichtung
- 84: Riemen
- 86: Sensorritzel
- 87: Steuerungs- und Regelungseinrichtung
- 88: Außengehäuse
- 89: Schnittstellen
- 90: Zwischenwand
- 91: Durchbrüche in Zwischenwand
- 92: Gehäusedeckel
- 94: Gehäusemantel
- 96: Gehäuseboden
- 98: Getriebe- und/oder Kupplungsabschnitt
- 100: Elektronikabschnitt
- 101: Lagerelement
- 102: Flachdichtungen
- 104: Kabelhalterung
- 106: Platinenraum
- 108: Hauptplatine
- 110: Kommunikationsplatine
- 112: Ethernet-Kommunikationsplatine
- 114: Bremschopper

## Patentansprüche

1. Spann- oder Greifvorrichtung (10), insbesondere Parallelgreifer, mit einem Grundgehäuse (12),
mit wenigstens einer in dem Grundgehäuse (12) angeordneten und entlang einer Führungsachse (14, 14a, 14b) erstreckenden Backenführung (16),
mit wenigstens einer in der Backenführung (16) zwischen einer Greifposition und einer Freigabeposition verlagerbaren Greifbacke (18, 18a, 18b),
mit einer Antriebseinrichtung (20) zum Verlagern der wenigstens einen Greifbacke (18, 18a, 18b),
wobei die Antriebseinrichtung (20) einen Rotationsantrieb (22) aufweist und eine sich senkrecht zur Führungsachse (14, 14a, 14b) erstreckende, im Grundgehäuse (12) drehbar gelagerte Antriebswelle (26) zum Verbinden des Rotationsantriebs (22) und der wenigstens einen Greifbacke (18, 18a, 18b) aufweist und eine Getriebeeinrichtung (32) und/oder eine Kupplungseinrichtung (34) aufweist,
mit einer Positionsmesseinrichtung (80) zum Erfassen des Drehwinkels der Antriebseinrichtung (20), insbesondere des Rotationsantriebs (22) und/oder der Antriebswelle (26), und/oder zum Erfassen der Position der wenigstens einen Greifbacke (18, 18a, 18b),
wobei das Grundgehäuse (12) eine Zwischenwand (90) aufweist, die das Innere des Grundgehäuses (12) in einen Getriebe- und/oder Kupplungsabschnitt (98), in dem die Getriebeeinrichtung (32) und/oder die Kupplungseinrichtung (34) angeordnet ist, und in einen Elektronikabschnitt (100), in dem der Rotationsantrieb (22) und/oder die Positionsmesseinrichtung (80) angeordnet ist, unterteilt,
wobei sich die Antriebswelle (26) in den Elektronikabschnitt (100) hinein erstreckt, wobei der Getriebe- und/oder Kupplungsabschnitt (98) zwischen der wenigstens einen Greifbacke (18, 18a, 18b) und dem Elektronikabschnitt (100) angeordnet ist,
wobei die Antriebswelle (26) ein erstes freies Ende (70) aufweist, und wobei das erste freie Ende (70) der Antriebswelle (26) im Elektronikabschnitt (100) angeordnet ist,
wobei die Antriebswelle (26) ein dem ersten freien Ende (70) gegenüberliegendes zweites freies Ende (72) aufweist, wobei am zweiten freien Ende (72) der Antriebswelle (26) ein zur Getriebeeinrichtung (32) und/oder zur Kupplungseinrichtung (34) separat ausgebildetes Antriebsritzel (28) angeordnet ist, wobei an der wenigstens einen Greifbacke (18, 18a, 18b) ein zur Getriebeeinrichtung (32) und/oder zur Kupplungseinrichtung (34) separat ausgebildetes und mit dem Antriebsritzel (28) zusammenwirkendes Zahnstangenprofil (30) angeordnet ist.

2. Spann- oder Greifvorrichtung (10) nach einem vorherigen Anspruch, wobei die Antriebswelle (26) sich durch den Getriebe- und/oder Kupplungsabschnitt (98) hindurch erstreckt.

3. Spann- oder Greifvorrichtung (10) nach einem vorherigen Anspruch, wobei die Antriebswelle (26) in der Zwischenwand (90) drehbar gelagert ist.

4. Spann- oder Greifvorrichtung (10) nach einem vorherigen Anspruch, wobei die Positionsmesseinrichtung (80) eine mit der Antriebswelle (26) zusammenwirkende Winkelmesseinrichtung (82) und/oder einen Riemen (84) umfasst.

5. Spann- oder Greifvorrichtung (10) nach Anspruch 4, wobei die Winkelmesseinrichtung (82) mittels des Riemens (84) mit der Antriebswelle (26) verbunden ist, wobei insbesondere der Riemen (84) die Drehzahl der Antriebswelle (26) zur Winkelmesseinrichtung (82) hin untersetzt.

6. Spann- oder Greifvorrichtung (10) nach einem vorherigen Anspruch, wobei der Rotationsantrieb eine Motorregelungseinrichtung, insbesondere einen Inkrementalgeber, zur Motorregelung und -kommutierung umfasst.

7. Spann- oder Greifvorrichtung (10) nach einem vorherigen Anspruch, wobei die Spann- oder Greifvorrichtung (10) die Kupplungsvorrichtung (34) aufweist, wobei die Kupplungseinrichtung (34) als eine Klauenkupplung ausgebildet ist und ein erstes Kupplungselement (46), ein zweites Kupplungselement (48) und wenigstens ein in Umfangsrichtung zwischen dem ersten Kupplungselement (46) und dem zweiten Kupplungselement (48) angeordnetes Elastomerelement (50) aufweist.

8. Spann- oder Greifvorrichtung (10) nach Anspruch 7 und 9, wobei das erste Kupplungselement (46) dem Antriebsritzel (28) zugewandt ist und mit der Antriebswelle (26) drehfest verbunden ist, und wobei das zweite Kupplungselement (48) dem Antriebsritzel (26) abgewandt ist und drehbar auf der Antriebswelle (26) gelagert ist.

9. Spann- oder Greifvorrichtung (10) nach einem vorherigen Anspruch, wobei die Spann- oder Greifvorrichtung (10) die Getriebeeinrichtung (32) aufweist, wobei die Getriebeeinrichtung (32) ein auf der Antriebswelle (26) angeordnetes erstes Doppelritzel (36) aufweist, wobei im Grundgehäuse (12), insbesondere im Getriebe- und/oder Kupplungsabschnitt (98), eine parallel und beabstandet zur Antriebswelle (26) erstreckende Lagerwelle (44) vorgesehen ist, wobei auf der Lagerwelle (44) ein mit dem ersten Doppelritzel (36) zusammenwirkendes zweites Doppelritzel (42) angeordnet ist.

10. Spann- oder Greifvorrichtung (10) nach Anspruch 9, wobei das zweite Kupplungselement (48) ein mit dem zweiten Doppelritzel (42) zusammenwirkendes Kupplungsritzel (62) aufweist.

11. Spann- oder Greifvorrichtung (10) nach Anspruch 9 oder 10, wobei der Rotationsantrieb (22) als Außenläufermotor ausgebildet ist und ein mit dem ersten Doppelritzel (36) zusammenwirkendes Abtriebsritzel (40) aufweist.

12. Spann- oder Greifvorrichtung (10) nach einem vorherigen Anspruch, wobei eine Bremseinrichtung (64) an der Antriebseinrichtung (20) zur Greifkrafterhaltung vorgesehen ist.

13. Spann- oder Greifvorrichtung (10) nach einem vorherigen Anspruch, wobei die Spann- oder Greifvorrichtung (10) eine Steuerungs- und Regelungseinrichtung (87) zur Steuerung und/oder Regelung der Antriebseinrichtung (20), der Bremseinrichtung (64), der Positionsmesseinrichtung (80) und/oder der Motorregelungseinrichtung aufweist.

## Claims

1. A clamping or gripping device (10), in particular a parallel gripper, comprising a base housing (12),
comprising at least one jaw guide (16) which is arranged in the base housing (12) and extends along a guide axis (14, 14a, 14b),
comprising at least one gripping jaw (18, 18a, 18b) which is movable in the jaw guide (16) between a gripping position and a release position,
comprising a drive apparatus (20) for moving the at least one gripping jaw (18, 18a, 18b),
wherein the drive apparatus (20) has a rotary drive (22), a drive shaft (26) for connecting the rotary drive (22) and the at least one gripping jaw (18, 18a, 18b), the drive shaft extending perpendicularly with respect to the guide axis (14, 14a, 14b) and being rotatably mounted in the base housing (12), and a transmission apparatus (32) and/or a clutch apparatus (34),
comprising a position measuring apparatus (80) for detecting the rotation angle of the drive apparatus (20), in particular of the rotary drive (22) and/or the drive shaft (26), and/or for detecting the position of the at least one gripping jaw (18, 18a, 18b),
wherein the base housing (12) has a partition (90) which divides the interior of the base housing (12) into a transmission and/or clutch portion (98), in which the transmission apparatus (32) and/or the clutch apparatus (34) is arranged, and into an electronics portion (100), in which the rotary drive (22) and/or the position measuring apparatus (80) is arranged,
wherein the drive shaft (26) extends into the electronics portion (100), wherein the transmission and/or clutch portion (98) is located between the at least one gripping jaw (18, 18a, 18b) and the electronics portion (100),
wherein the drive shaft (26) has a first free end (70), and wherein the first free end (70) of the drive shaft (26) is arranged in the electronics portion (100),
wherein the drive shaft (26) has a second free end (72) which is opposite the first free end (70), wherein a drive pinion (28) which is formed separately from the transmission apparatus (32) and/or the clutch apparatus (34) is arranged at the second free end (72) of the drive shaft (26), wherein a rack profile (30) which is formed separately from the transmission apparatus (32) and/or the clutch apparatus (34) and interacts with the drive pinion (28) is arranged on the at least one gripping jaw (18, 18a, 18b).

2. The clamping or gripping device (10) according to any preceding claim, wherein the drive shaft (26) extends through the transmission and/or clutch portion (98).

3. The clamping or gripping device (10) according to any preceding claim, wherein the drive shaft (26) is rotatably mounted in the partition (90).

4. The clamping or gripping device (10) according to any preceding claim, wherein the position measuring apparatus (80) comprises an angle measuring apparatus (82) which interacts with the drive shaft (26), and/or comprises a belt (84).

5. The clamping or gripping device (10) according to claim 4, wherein the angle measuring apparatus (82) is connected to the drive shaft (26) by means of the belt (84), wherein in particular the belt (84) reduces the rotational speed of the drive shaft (26) toward the angle measuring apparatus (82).

6. The clamping or gripping device (10) according to any preceding claim, wherein the rotary drive comprises an motor control apparatus, in particular an incremental encoder, for closed-loop control and commutation of the motor.

7. The clamping or gripping device (10) according to any preceding claim, wherein the clamping or gripping device (10) has the clutch device (34), wherein the clutch apparatus (34) is in the form of a claw clutch and has a first clutch element (46), a second clutch element (48), and at least one elastomer element (50) which is arranged in the circumferential direction between the first clutch element (46) and the second clutch element (48).

8. The clamping or gripping device (10) according to claim 7 and 9, wherein the first clutch element (46) faces the drive pinion (28) and is connected to the drive shaft (26) for conjoint rotation, and wherein the second clutch element (48) faces away from the drive pinion (26) and is rotatably mounted on the drive shaft (26).

9. The clamping or gripping device (10) according to any preceding claim, wherein the clamping or gripping device (10) has the transmission apparatus (32), wherein the transmission apparatus (32) has a first double pinion (36) which is arranged on the drive shaft (26), wherein a bearing shaft (44) which extends parallel to and at a distance from the drive shaft (26) is provided in the base housing (12), in particular in the transmission and/or clutch portion (98), wherein a second double pinion (42) which interacts with the first double pinion (36) is arranged on the bearing shaft (44).

10. The clamping or gripping device (10) according to claim 9, wherein the second clutch element (48) has a clutch pinion (62) which interacts with the second double pinion (42).

11. The clamping or gripping device (10) according to claim 9 or 10, wherein the rotary drive (22) is in the form of an external rotor motor and has an output pinion (40) which interacts with the first double pinion (36).

12. The clamping or gripping device (10) according to any preceding claim, wherein a braking apparatus (64) is provided on the drive apparatus (20) for maintaining gripping force.

13. The clamping or gripping device (10) according to any preceding claim, wherein the clamping or gripping device (10) has an open- and closed-loop control apparatus (87) for controlling the drive apparatus (20), the braking apparatus (64), the position measuring apparatus (80), and/or the motor control apparatus in an open- and/or closed loop.

## Revendications

1. Dispositif de serrage ou de préhension (10), en particulier pince parallèle, comprenant un boîtier de base (12), comprenant au moins un guidage de mors (16) disposé dans le boîtier de base (12)
et s'étendant le long d'un axe de guidage (14, 14a, 14b),
comprenant au moins un mors de préhension (18, 18a, 18b) déplaçable dans le guidage de mors (16) entre une position de préhension et une position de libération,
comprenant un dispositif d'entraînement (20) destiné à déplacer ledit au moins un mors de préhension (18, 18a, 18b),
le dispositif d'entraînement (20) comprenant un entraînement rotatif (22) et un arbre d'entraînement (26), s'étendant perpendiculairement à l'axe de guidage (14, 14a, 14b) et monté de manière rotative dans le boîtier de base (12), destiné à relier l'entraînement rotatif (22) audit au moins un mors de préhension (18, 18a, 18b), et comprenant un dispositif de transmission (32) et/ou un dispositif d'embrayage (34),
comprenant un dispositif de mesure de position (80) destiné à détecter l'angle de rotation du dispositif d'entraînement (20), en particulier de l'entraînement rotatif (22) et/ou de l'arbre d'entraînement (26), et/ou destiné à détecter la position dudit au moins un mors de préhension (18, 18a, 18b),
le boîtier de base (12) comprenant une paroi intermédiaire (90) qui subdivise l'intérieur du boîtier de base (12) en une section de transmission et/ou d'embrayage (98), dans laquelle le dispositif de transmission (32) et/ou le dispositif d'embrayage (34) est disposé, et en un compartiment électronique (100), dans lequel l'entraînement rotatif (22) et/ou le dispositif de mesure de position (80) est disposé,
l'arbre d'entraînement (26) s'étendant dans le compartiment électronique (100), la section de transmission et/ou d'embrayage (98) étant disposée entre ledit au moins un mors de préhension (18, 18a, 18b) et le compartiment électronique (100),
l'arbre d'entraînement (26) présentant une première extrémité libre (70), la première extrémité libre (70) de l'arbre d'entraînement (26) étant disposée dans le compartiment électronique (100),
l'arbre d'entraînement (26) présente une deuxième extrémité libre (72) opposée à la première extrémité libre (70), un pignon d'entraînement (28), réalisé séparément du dispositif de transmission (32) et/ou du dispositif d'embrayage (34), étant disposé sur la deuxième extrémité libre (72) de l'arbre d'entraînement (26), un profil de crémaillère (30), réalisé séparément du dispositif de transmission (32) et/ou du dispositif d'embrayage (34) et coopérant avec le pignon d'entraînement (28), étant disposé sur au moins un mors de préhension (18, 18a, 18b).

2. Dispositif de serrage ou de préhension (10) selon l'une quelconque des revendications précédentes, dans lequel l'arbre d'entraînement (26) s'étend à travers la section de transmission et/ou d'embrayage (98).

3. Dispositif de serrage ou de préhension (10) selon l'une quelconque des revendications précédentes, dans lequel l'arbre d'entraînement (26) est monté rotatif dans la paroi intermédiaire (90).

4. Dispositif de serrage ou de préhension (10) selon l'une quelconque des revendications précédentes, dans lequel le dispositif de mesure de position (80) comprend un dispositif de mesure angulaire (82) et/ou une courroie (84) coopérant avec l'arbre d'entraînement (26).

5. Dispositif de serrage ou de préhension (10) selon la revendication 4, dans lequel le dispositif de mesure angulaire (82) est relié à l'arbre d'entraînement (26) au moyen de la courroie (84), la courroie (84) réduisant notamment la vitesse de rotation de l'arbre d'entraînement (26) en direction du dispositif de mesure angulaire (82).

6. Dispositif de serrage ou de préhension (10) selon l'une quelconque des revendications précédentes, dans lequel l'entraînement rotatif comprend un dispositif de régulation du moteur, notamment un codeur incrémental, destiné à la régulation et à la commutation du moteur.

7. Dispositif de serrage ou de préhension (10) selon l'une quelconque des revendications précédentes, dans lequel le dispositif de serrage ou de préhension (10) comprend le dispositif d'embrayage (34), le dispositif d'embrayage (34) étant réalisé sous la forme d'un embrayage à griffes et comprenant un premier élément d'embrayage (46), un deuxième élément d'embrayage (48) et au moins un élément en élastomère (50) disposé dans la direction circonférentielle entre le premier élément d'embrayage (46) et le deuxième élément d'embrayage (48).

8. Dispositif de serrage ou de préhension (10) selon les revendications 7 et 9, dans lequel le premier élément d'embrayage (46) est orienté vers le pignon d'entraînement (28) et est relié solidairement en rotation à l'arbre d'entraînement (26), et dans lequel le deuxième élément d'embrayage (48) est opposé au pignon d'entraînement (26) et est monté rotatif sur l'arbre d'entraînement (26).

9. Dispositif de serrage ou de préhension (10) selon une revendication précédente, dans lequel le dispositif de serrage ou de préhension (10) comprend le dispositif de transmission (32), le dispositif de transmission (32) comprenant un premier double pignon (36) disposé sur l'arbre d'entraînement (26), un arbre de support (44) s'étendant parallèlement à l'arbre d'entraînement (26) et à distance de celui-ci étant prévu dans le boîtier de base (12), notamment dans la section de transmission et/ou d'embrayage (98), un deuxième double pignon (42) coopérant avec le premier double pignon (36) étant disposé sur l'arbre de support (44).

10. Dispositif de serrage ou de préhension (10) selon la revendication 9, dans lequel le deuxième élément d'embrayage (48) comprend un pignon d'embrayage (62) coopérant avec le deuxième double pignon (42).

11. Dispositif de serrage ou de préhension (10) selon la revendication 9 ou 10, dans lequel l'entraînement rotatif (22) est réalisé sous forme de moteur à rotor extérieur et comprend un pignon de sortie (40) qui coopère avec le premier double pignon (36).

12. Dispositif de serrage ou de préhension (10) selon une revendication précédente, dans lequel un dispositif de freinage (64) est prévu sur le dispositif d'entraînement (20) pour maintenir la force de préhension.

13. Dispositif de serrage ou de préhension (10) selon une revendication précédente, dans lequel le dispositif de serrage ou de préhension (10) comprend un dispositif de commande et de régulation (87) destiné à commander et/ou réguler le dispositif d'entraînement (20), le dispositif de freinage (64), le dispositif de mesure de position (80) et/ou le dispositif de régulation du moteur.
